# EUROPÄISCHE PATENTSCHRIFT

(11) **EP 2 789 091 B1**
(45) Veröffentlichungstag und Bekanntmachung des Hinweises auf die Patenterteilung: **21.10.2015**
(21) Anmeldenummer: 12794917.0
(22) Anmeldetag: 22.11.2012
(51) Int. Cl.: H02M 7/162, H02M 7/48, H02M 1/32

(54) **VERFAHREN ZUR ELIMINATION EINES MITTELS MINDESTENS EINER PHASENSPANNUNGSQUELLE EINER UMRICHTERSCHALTUNG GETRIEBENEN LICHTBOGENS**
METHOD FOR ELIMINATING AN ELECTRIC ARC DRIVEN BY AT LEAST ONE VOLTAGE SOURCE OF AN INVERTER CIRCUIT
PROCÉDÉ D'ÉLIMINATION D'UN ARC ÉLECTRIQUE GÉNÉRÉ PAR AU MOINS UNE SOURCE DE TENSION SIMPLE D'UN CIRCUIT ONDULEUR

(30) Priorität: 05.12.2011 EP 11191935
(43) Veröffentlichungstag der Anmeldung: 15.10.2014
(73) Patentinhaber: ABB Technology AG, 8050 Zürich (CH)
(72) Erfinder: GUGGISBERG, Adrian, CH-5303 Würenlingen (CH); ECKERLE, John, CH-4058 Basel (CH); WAHLSTROEM, Jonas, CH-5213 Villnachern (CH)
(74) Vertreter: ABB Patent Attorneys
(86) Internationale Anmeldenummer: PCT/EP2012/073360
(87) Internationale Veröffentlichungsnummer: WO 2013/083414

(56) Entgegenhaltungen:
- WO-A1-86/05651
- DE-A1-102009 002 684

## Beschreibung

### Technisches Gebiet

Die Erfindung bezieht sich auf das Gebiet der Leistungselektronik. Sie geht aus von einem Verfahren zur Elimination eines mittels mindestens einer Phasenspannungsquelle einer Umrichterschaltung getriebenen Lichtbogens gemäss dem Oberbegriff des unabhängigen Anspruchs.

### Stand der Technik

Umrichterschaltungen weisen heute typischerweise eine Umrichtereinheit auf, an deren Wechselspannungsseite mindestens zwei Phasenanschlüsse vorgesehen sind, an denen dann Phasenspannungsquellen zur Bereitstellung einer entsprechenden Wechselspannung angeschlossen werden können. Auf der Gleichspannungsseite der Umrichtereinheit umfasst die Umrichterschaltung typischerweise einen Energiespeicherkreis, der beispielsweise durch einen oder mehrere kapazitive Energiespeicher gebildet ist.

Im Betrieb der Umrichterschaltung, wenn also elektrische Energie von der Wechselspannungsseite der Umrichtereinheit zur Gleichspannungsseite der Umrichtereinheit fliesst und die Wechselspannung dabei gleichgerichtet wird, oder wenn elektrische Energie von der Gleichspannungsseite der Umrichtereinheit zur Wechselspannungsseite der Umrichtereinheit fliesst und die Gleichspannung dabei wechselgerichtet wird, kann es durch einen Fehler vorkommen, dass ein mittels der Phasenspannungsquelle strommässig getriebener Lichtbogen beispielsweise auf der Wechselspannungsseite der Umrichtereinheit aber auch auf der Gleichspannungsseite der Umrichtereinheit auftritt. Ein solcher Lichtbogen ist hochgradig unerwünscht, da er die Umrichtereinheit, aber auch die gesamte Umrichterschaltung beschädigen oder gar zerstören kann.

Üblicherweise werden mechanische Schalter an den Phasenanschlüssen zum Kurzschliessen der Phasenspannungsquelle oder Phasenspannungsquellen eingesetzt. Wird ein auftretender Lichtbogen bei einer Umrichterschaltung detektiert, werden die mechanischen Schalter zum Kurzschliessen der Phasenspannungsquelle oder Phasenspannungsquelle geschlossen, um den von der Phasenspannungsquelle oder den Phasenspannungsquellen strommässig getriebenen Lichtbogen zu eliminieren. Solche mechanischen Schalter haben aber ein träges Ansprechverhalten, eine enorme Baugrösse, sind wartungsintensiv und Erhöhen den Aufwand des Aufbaus der Umrichterschaltung.

Wie in der DE 10 2009 002 684 A1 offenbart, können unerwünschte Lichtbögen auch in einer Umrichterschaltung zur Speisung einer Plasmalast auftreten, wobei der Lichtbogen durch MF-Spulen L1, L2 der Umrichterschaltung erzeugt wird, wie in der DE 10 2009 002 684 A1 in Abschnitt [0006] und [0007] in Verbindung mit Fig. 1a beschrieben. Zur Elimination eines durch die MF-Spulen L1, L2 der Umrichterschaltung erzeugten Lichtbogens wird die Spannung an den Ausgangsanschlüssen 13, 14 umgepolt, wobei zuvor die Spannung auf einen Wert im Bereich von 0V und der Strom über die Ausgangsanschlüsse 13, 14 auf einen auf einen Wert im Bereich von OA eingestellt wird, d.h., dass die angeschlossene Plasmalast spannungs-und stromlos gestellt wird, wie in der DE 10 2009 002 684 A1 in Abschnitt [0045] beschrieben.

In den WO 86/05651 wird das Auftreten eines Lichtbogens durch die Überwachung der Hochfrequenzstromkomponente in der Last detektiert. In diesen Fall werden alle Leistungshalbleiterschalter der Umrichtereinheit zur Beseitigung des Lichtbogens gespent.

### Darstellung der Erfindung

Aufgabe der Erfindung ist es deshalb, ein Verfahren zur Elimination eines mittels mindestens einer Phasenspannungsquelle einer Umrichterschaltung getriebenen Lichtbogens anzugeben, mittels welchem sich ein auftretender Lichtbogen in einer Umrichterschaltung besonders einfach und schnell eliminieren lässt.

Diese Aufgabe wird durch die Merkmale des Anspruchs 1 bzw. durch die Merkmale des Anspruchs 4 gelöst. In den abhängigen Ansprüchen sind vorteilhafte Weiterbildungen der Erfindung angegeben.

Beim erfindungsgemässe Verfahren weist die Umrichterschaltung eine Umrichtereinheit, mindestens eine Phasenspannungsquelle und einen Energiespeicherkreis auf, wobei auf der Wechselspannungsseite der Umrichtereinheit die mindestens eine Phasenspannurigsquelle angeschlossen ist. Die Umrichtereinheit umfasst ferner eine Vielzahl an ansteuerbaren Leistungshalbleiterschaltern. Verfahrensmässig wird während des Betriebes der Umrichterschaltung ein auftretender Lichtbogen detektiert und daraufhin wird dann die mindestens eine Phasenspannungsquelle kurzgeschlossen. Erfindungsgemäss wird nun zur Detektion des Lichtbogens eine Zustandsgrösse der Umrichterschaltung auf einen vorgebbaren Schwellwert der Zustandsgrösse hin überwacht. Bei Abweichung der Zustandsgrösse vom vorgebbaren Schwellwert wird dann zumindest ein Teil der ansteuerbaren Leistungshalbleiterschalter der Umrichtereinheit derart angesteuert, dass mindestens ein Kurzschlusspfad über die Umrichtereinheit zum Kurzschluss der mindestens einen Phasenspannungsquelle gebildet wird. Mittels der vorstehend genannten Detektion eines auftretenden Lichtbogens und der Bildung mindestens eines Kurzschlusspfades über die Umrichtereinheit kann der auftretende Lichtbogen vorteilhaft besonders einfach und schnell gelöscht und damit eliminiert werden. Zusätzliche Kurzschlusseinrichtungen, wie aus dem Stand der Technik bekannte mechanische Schalter zum Kurzschliessen der mindestens einen Phasenspannungsquelle, werden nicht benötigt.

Alternativ zur vorstehend genannten Detektion über eine Zustandsgrösse der Umrichterschaltung wird zur Detektion des Lichtbogens die Umgebung der Umrichterschaltung optisch auf das Auftreten eines Lichtbogenlichtes hin überwacht, wobei bei Auftreten des Lichtbogenlichtes ebenfalls zumindest ein Teil der ansteuerbaren Leistungshalbleiterschalter der Umrichtereinheit derart angesteuert wird, dass mindestens ein Kurzschlusspfad über die Umrichtereinheit zum Kurzschluss der mindestens einen Phasenspannungsquelle gebildet wird. Auch mittels dieser alternativen Detektion eines auftretenden Lichtbogens und der Bildung mindestens eines Kurzschlusspfades über die Umrichtereinheit kann der auftretende Lichtbogen vorteilhaft besonders einfach und schnell gelöscht und somit eliminiert werden. Zusätzliche Kurzschlusseinrichtungen werden auch hier nicht benötigt.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer Umrichterschaltung mit eingezeichneten Kurzschlussstrompfaden nach dem erfindungsgemässen Verfahren,
- Fig. 2: eine zweite Ausführungsform einer Umrichterschaltung mit eingezeichneten Kurzschlussstrompfaden nach dem erfindungsgemässen Verfahren,
- Fig. 3: eine dritte Ausführungsform einer Umrichterschaltung mit eingezeichneten Kurzschlussstrompfaden nach dem erfindungsgemässen Verfahren und
- Fig.4: eine vierte Ausführungsform einer Umrichterschaltung mit eingezeichneten Kurzschlussstrompfaden nach dem erfindungsgemässen Verfahren.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

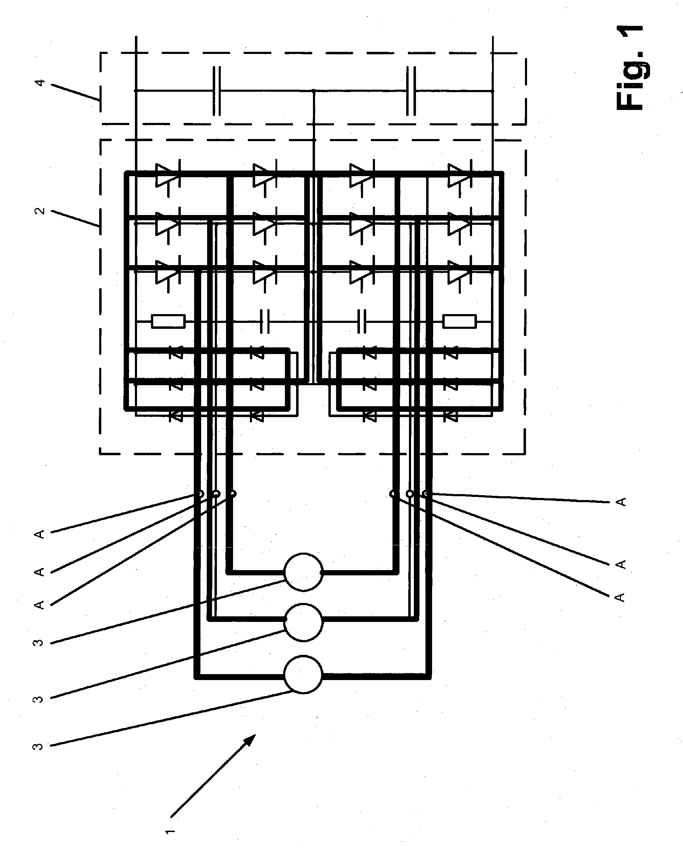

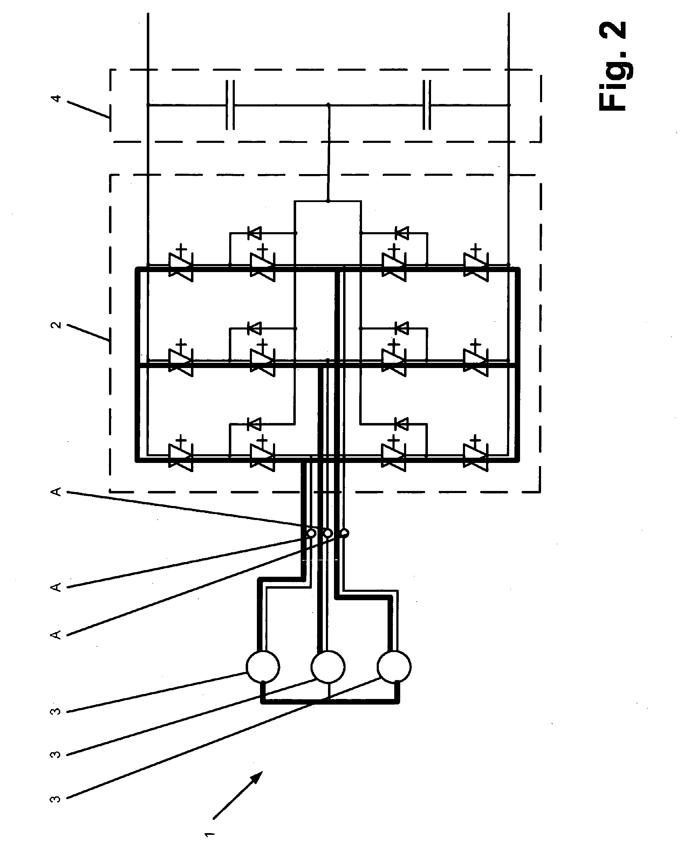

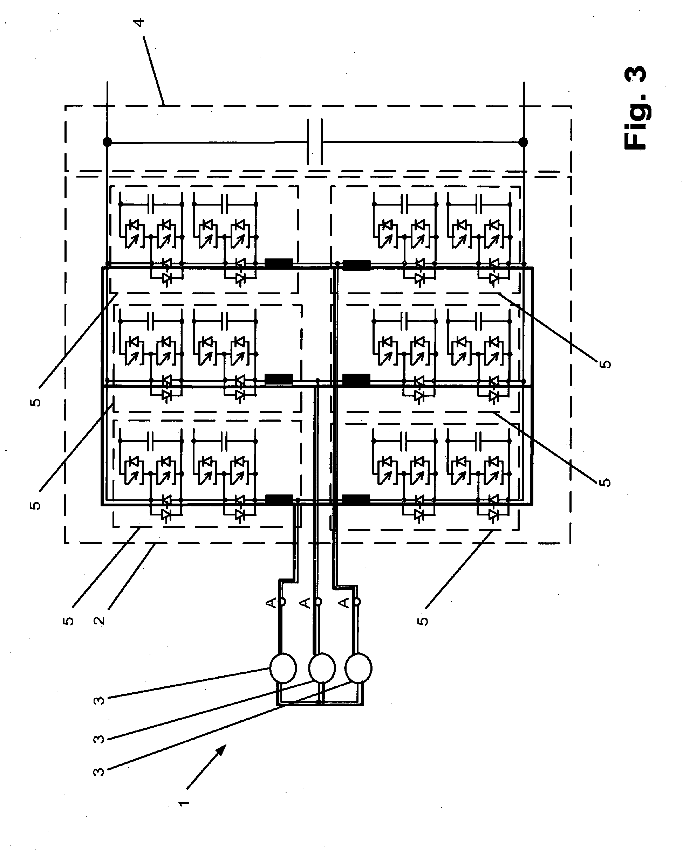

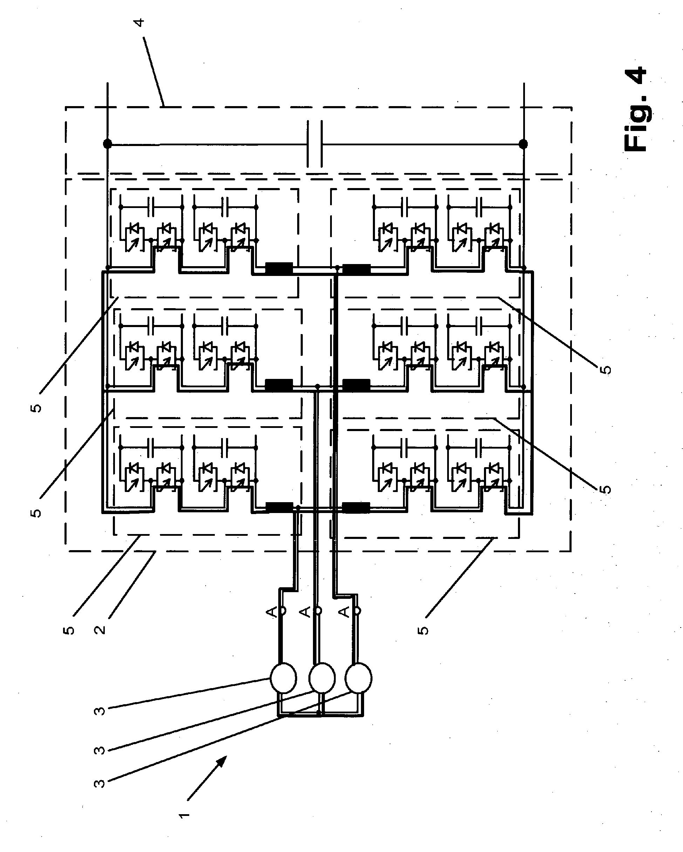

In Fig. 1 ist eine erste Ausführungsform einer Umrichterschaltung mit eingezeichneten Kurzschlussstrompfaden nach dem erfindungsgemässen Verfahren dargestellt. In den Fig. 2 bis Fig. 4 ist eine zweite, dritte bzw. vierte Ausführungsform einer Umrichterschaltung gezeigt, wobei in jeder dieser Umrichterschaltungen mögliche Kurzschlusspfade nach dem erfindungsgemässen Verfahren eingezeichnet sind. Die jeweils möglichen Kurzschlusspfade der Umrichterschaltungen nach Fig. 1 bis Fig. 4 sind als fettgedruckte Linien dargestellt. Allgemein weist die Umrichterschaltung 1 eine Umrichtereinheit 2, mindestens eine Phasenspannungsquelle 3 und einen Energiespeicherkreis 4 aufweist, wobei auf der Wechselspannungsseite der Umrichtereinheit 2 die mindestens eine Phasenspannungsquelle 3 angeschlossen ist. Der Anschluss der Phasenspannungsquelle 3 erfolgt an einem Phasenanschluss A an der Wechselspannungsseite der Umrichtereinheit 2. Da die Umrichterschaltungen nach Fig. 1 bis Fig. 4 alle dreiphasig ausgebildet sind, sind auch jeweils drei Phasenspannungsquellen 3 vorgesehen, wobei allgemein, wie bereits erwähnt, mindestens eine Phasenspannungsquelle 3 vorgesehen ist. Ferner weist die Umrichtereinheit 2 allgemein eine Vielzahl an ansteuerbaren Leistungshalbleiterschaltern auf, wobei gemäss Fig. 1 als ansteuerbare Leistungshalbleiterschalter Thyristoren und gemäss Fig. 2 integrierte Thyristoren mit kommutierter Ansteuerelektrode (IGCT - Integrated Gate Commutated Thyristor) zum Einsatz kommen. Hingegen kommen bei der Umrichterschaltung nach Fig. 3 als ansteuerbare Leistungshalbleiterschalter vorzugsweise Bipolartransistoren mit isoliert angeordneter Gateelektrode (IGBT- Insulated Gate Bipolar Transistor) und Thyristoren zum Einsatz, wobei über die Thyristoren dann die möglichen Kurzschlusspfade laufen, wie in Fig. 3 dargestellt. Vorzugsweise werden auch bei der Umrichterschaltung nach Fig. 4 als ansteuerbare Leistungshalbleiterschalter IGCTs eingesetzt, über die dann mögliche Kurzschlusspfade laufen.

Verfahrensmässig wird, falls ein Lichtbogen während des Betriebes auftritt, dieser Lichtbogen detektiert und daraufhin wird dann die mindestens eine Phasenspannungsquelle 3 kurzgeschlossen. Ein solcher Lichtbogen kann durch einen Fehler auftreten, wobei der Lichtbogen typischerweise durch die mindestens eine Phasenspannungsquelle 3 strommässig getrieben wird. Erfindungsgemäss wird nun zur Detektion des Lichtbogens eine Zustandsgrösse der Umrichterschaltung 1 auf einen vorgebbaren Schwellwert der Zustandsgrösse hin überwacht. Bei Abweichung der Zustandsgrösse vom vorgebbaren Schwellwert wird dann zumindest ein Teil der ansteuerbaren Leistungshalbleiterschalter der Umrichtereinheit 2 derart angesteuert, dass mindestens ein Kurzschlusspfad über die Umrichtereinheit 2 zum Kurzschluss der mindestens einen Phasenspannungsquelle 3 gebildet wird. Mittels der vorstehend genannten Detektion eines auftretenden Lichtbogens und der Bildung mindestens eines Kurzschlusspfades über die Umrichtereinheit 2 kann der auftretende Lichtbogen vorteilhaft besonders einfach und schnell gelöscht und damit eliminiert werden. Auf zusätzliche Kurzschlusseinrichtungen kann vorteilhaft verzichtet werden.

Alternativ zur vorstehend genannten Detektion über eine Zustandsgrösse der Umrichterschaltung 1 wird zur Detektion des Lichtbogens die Umgebung der Umrichterschaltung 1 optisch auf das Auftreten eines Lichtbogenlichtes hin überwacht, wobei bei Auftreten des Lichtbogenlichtes ebenfalls zumindest ein Teil der ansteuerbaren Leistungshalbleiterschalter der Umrichtereinheit 2 derart angesteuert wird, dass wieder mindestens ein Kurzschlusspfad über die Umrichtereinheit 2 zum Kurzschluss der mindestens einen Phasenspannungsquelle 3 gebildet wird. Zur optischen Überwachung kann beispielsweise eine Photodiode oder ein sonstiges lichtempfindliches elektronisches Bauelement oder aber eine Kamera eingesetzt werden. Auch mittels dieser alternativen Detektion eines auftretenden Lichtbogens und der Bildung mindestens eines Kurzschlusspfades über die Umrichtereinheit 2 kann der auftretende Lichtbogen vorteilhaft besonders einfach und schnell gelöscht und somit eliminiert werden. Auch bei dieser Alternative werden keine zusätzlichen Kurzschlusseinrichtungen benötigt.

Ist bezüglich der Umrichterschaltung 1 auf der Gleichspannungsseite der Umrichtereinheit ein Energiespeicherkreis 4 angeschlossen, wie in Fig. 1 bis Fig. 4 beispielhaft dargestellt, dann ist die Zustandsgrösse vorzugsweise die Spannung über dem Energiespeicherkreis 4 und der vorgebbare Schwellwert der Zustandsgrösse ist ein vorgebbarer Schwellwert der Spannung über dem Energiespeicherkreis 4. Der Energiespeicherkreis umfasst einen oder mehrere kapazitive Energiespeicher wie beispielsweise Kondensatoren. Bei Unterschreiten des vorgebbaren Schwellwertes der Spannung über dem Energiespeicherkreis 4 wird dann zumindest ein Teil der ansteuerbaren Leistungshalbleiterschalter der Umrichtereinheit 2 derart angesteuert, dass mindestens ein Kurzschlusspfad über die Umrichtereinheit 2 zum Kurzschluss der mindestens einen Phasenspannungsquelle 3 gebildet wird.

Als Alternative zu der Spannung über dem Energiespeicherkreis 4 als Zustandsgrösse ist es auch denkbar, dass die Zustandsgrösse die Spannung an einem Phasenanschluss A an der Wechselspannungsseite der Umrichtereinheit 2 ist und der vorgebbare Schwellwert der Zustandsgrösse dann ein vorgebbarer Schwellwert der Spannung an einem Phasenanschluss A an der Wechselspannungsseite der Umrichtereinheit 2 ist. Bei Unterschreiten des vorgebbaren Schwellwertes der Spannung an einem Phasenanschluss A an der Wechselspannungsseite der Umrichtereinheit 2 wird zumindest ein Teil der ansteuerbaren Leistungshalbleiterschalter der Umrichtereinheit 2 derart angesteuert, dass mindestens ein Kurzschlusspfad über die Umrichtereinheit 2 zum Kurzschluss der mindestens einen Phasenspannungsquelle 3 gebildet wird.

Bei einer Umrichterschaltung gemäss Fig. 3 und Fig. 4 ist es alternativ zu der Spannung über dem Energiespeicherkreis 4 als Zustandsgrösse oder zu der Spannung an einem Phasenanschluss A an der Wechselspannungsseite der Umrichtereinheit 2 als Zustandsgrösse auch denkbar, dass die Zustandsgrösse die Spannung über einer Teilumrichterschaltung 5, wie sie in Fig. 3 und Fig. 4 gezeigt ist, der Umrichtereinheit 2 ist und der vorgebbare Schwellwert der Zustandsgrösse dann ein vorgebbarer Schwellwert der Spannung über einer Teilumrichterschaltung 5 ist. Bei Abweichung, insbesondere bei Unterschreiten des vorgebbaren Schwellwertes der Spannung über einer Teilumrichterschaltung 5 wird zumindest ein Teil der ansteuerbaren Leistungshalbleiterschalter der Umrichtereinheit 2 derart angesteuert, dass mindestens ein Kurzschlusspfad über die Umrichtereinheit 2 zum Kurzschluss der mindestens einen Phasenspannungsquelle 3 gebildet wird.

### Bezugszeichenliste

- 1: Umrichterschaltung
- 2: Umrichtereinheit
- 3: Phasenspannungsquelle
- 4: Energiespeicherkreis
- 5: Teilumrichterschaltung
- A: Phasenanschluss

## Patentansprüche

1. Verfahren zur Elimination eines mittels mindestens einer Phasenspannungsquelle (3) einer Umrichterschaltung (1) getriebenen Lichtbogens, bei dem die Umrichterschaltung (1) eine Umrichtereinheit (2) und einen Energiespeicherkreis (4) aufweist, wobei auf der Wechselspannungsseite der Umrichtereinheit (2) die mindestens eine Phasenspannungsquelle (3) angeschlossen ist, und wobei die Umrichtereinheit (2) eine Vielzahl an ansteuerbaren Leistungshalbleiterschaltern aufweist,
bei dem während des Betriebes der Umrichterschaltung (1) ein auftretender Lichtbogen detektiert wird und daraufhin die mindestens eine Phasenspannungsquelle (3) kurzgeschlossen wird,
**dadurch gekennzeichnet,**
**dass** zur Detektion des Lichtbogens eine Zustandsgrösse der Umrichterschaltung (1) auf einen vorgebbaren Schwellwert der Zustandsgrösse hin überwacht wird, und
**dass** bei Abweichung der Zustandsgrösse vom vorgebbaren Schwellwert zumindest ein Teil der ansteuerbaren Leistungshalbleiterschalter der Umrichtereinheit (2) derart angesteuert wird, dass mindestens ein Kurzschlusspfad über die Umrichtereinheit (2) zum Kurzschluss der mindestens einen Phasenspannungsquelle (3) gebildet wird.

2. Verfahren nach Anspruch 1, **dadurch gekennzeichnet, dass** auf der Gleichspannungsseite der Umrichtereinheit (2) der Energiespeicherkreis (4) angeschlossen ist und die Zustandsgrösse die Spannung über dem Energiespeicherkreis (4) ist, der vorgebbare Schwellwert der Zustandsgrösse ein vorgebbarer Schwellwert der Spannung über dem Energiespeicherkreis (4) ist und bei Unterschreiten des vorgebbaren Schwellwertes der Spannung über dem Energiespeicherkreis (4) zumindest ein Teil der ansteuerbaren Leistungshalbleiterschalter der Umrichtereinheit (2) derart angesteuert wird, dass mindestens ein Kurzschlusspfad über die Umrichtereinheit (2) zum Kurzschluss der mindestens einen Phasenspannungsquelle (3) gebildet wird.

3. Verfahren nach Anspruch 1, **dadurch gekennzeichnet, dass** die Zustandsgrösse die Spannung an einem Phasenanschluss (A) an der Wechselspannungsseite der Umrichtereinheit (2) ist, der vorgebbaren Schwellwert der Zustandsgrösse ein vorgebbarer Schwellwert der Spannung an einem Phasenanschluss (A) an der Wechselspannungsseite der Umrichtereinheit (2) ist und bei Unterschreiten des vorgebbaren Schwellwertes der Spannung an einem Phasenanschluss (A) an der Wechselspannungsseite der Umrichtereinheit (2) zumindest ein Teil der ansteuerbaren Leistungshalbleiterschalter der Umrichtereinheit (2) derart angesteuert wird, dass mindestens ein Kurzschlusspfad über die Umrichtereinheit (2) zum Kurzschluss der mindestens einen Phasenspannungsquelle (3) gebildet wird.

4. Verfahren zur Elimination eines mittels mindestens einer Phasenspannungsquelle (3) einer Umrichterschaltung (1) getriebenen Lichtbogens, bei dem die Umrichterschaltung eine Umrichtereinheit (2) und einen Energiespeicherkreis (4) aufweist, wobei auf der Wechselspannungsseite der Umrichtereinheit (2) die mindestens eine Phasenspannungsquelle (3) angeschlossen ist und auf der Gleichspannungsseite der Umrichtereinheit (2) der Energiespeicherkreis (4) angeschlossen ist, und wobei die Umrichtereinheit (2) eine Vielzahl an ansteuerbaren Leistungshalbleiterschaltern aufweist,
bei dem während des Betriebes der Umrichterschaltung (1) ein auftretender Lichtbogen detektiert wird und daraufhin die mindestens eine Phasenspannungsquelle (3) kurzgeschlossen wird,
**dadurch gekennzeichnet,**
**dass** zur Detektion des Lichtbogens die Umgebung der Umrichterschaltung optisch auf das Auftreten eines Lichtbogenlichtes hin überwacht wird, und
**dass** bei Auftreten des Lichtbogenlichtes zumindest ein Teil der ansteuerbaren Leistungshalbleiterschalter der Umrichtereinheit (2) derart angesteuert wird, dass mindestens ein Kurzschlusspfad über die Umrichtereinheit (2) zum Kurzschluss der mindestens einen Phasenspannungsquelle (3) gebildet wird.

## Claims

1. Method for eliminating an arc driven by means of at least one phase voltage source (3) of a converter circuit (1), in which method the converter circuit (1) has a converter unit (2) and an energy storage circuit (4), wherein the at least one phase voltage source (3) is connected on the AC voltage side of the converter unit (2), and wherein the converter unit (2) has a multiplicity of actuable power semiconductor switches,
in which, during operation of the converter circuit (1), an arc which occurs is detected and, thereupon, the at least one phase voltage source (3) is shortcircuited,
**characterized**
**in that**, in order to detect the arc, a state variable of the converter circuit (1) is monitored for a predeterminable threshold value of the state variable, and
**in that**, in the event of a discrepancy between the state variable and the predeterminable threshold value, at least some of the actuable power semiconductor switches of the converter unit (2) are actuated such that at least one short-circuiting path is formed via the converter unit (2) in order to short-circuit the at least one phase voltage source (3).

2. Method according to Claim 1, **characterized in that** the energy storage circuit (4) is connected on the DC voltage side of the converter unit (2), and the state variable is the voltage across the energy storage circuit (4), the predeterminable threshold value of the state variable is a predeterminable threshold value of the voltage across the energy storage circuit (4) and, in the event that the predeterminable threshold value of the voltage across the energy storage circuit (4) is undershot, at least some of the actuable power semiconductor switches of the converter unit (2) are actuated such that at least one short-circuiting path is formed via the converter unit (2) in order to short-circuit the at least one phase voltage source (3).

3. Method according to Claim 1, **characterized in that** the state variable is the voltage at a phase connection (A) on the AC voltage side of the converter unit (2), the predeterminable threshold value of the state variable is a predeterminable threshold value of the voltage at a phase connection (A) on the AC voltage side of the converter unit (2), and, in the event that the predeterminable threshold value of the voltage at a phase connection (A) on the AC voltage side of the converter unit (2) is undershot, at least some of the actuable power semiconductor switches of the converter unit (2) are actuated such that at least one short-circuiting path is formed via the converter unit (2) in order to short-circuit the at least one phase voltage source (3).

4. Method for eliminating an arc driven by means of at least one phase voltage source (3) of a converter circuit (1), in which method the converter circuit has a converter unit (2) and an energy storage circuit (4), wherein the at least one phase voltage source (3) is connected on the AC voltage side of the converter unit (2), and the energy storage circuit (4) is connected on the DC voltage side of the converter unit (2), and wherein the converter unit (2) has a multiplicity of actuable power semiconductor switches,
in which, during operation of the converter circuit (1), an arc which occurs is detected and, thereupon, the at least one phase voltage source (3) is shortcircuited,
**characterized**
**in that**, in order to detect the arc, the surrounding environment of the converter circuit is monitored visually for the occurrence of an arc light, and in that in the event of the occurrence of the arc light, at least some of the actuable power semiconductor switches of the converter unit (2) are actuated such that at least one short-circuiting path is formed via the converter unit (2) in order to short-circuit the at least one phase voltage source (3).

## Revendications

1. Procédé d'élimination d'un arc électrique excité par l'intermédiaire d'au moins une source de tension de phase (3) d'un circuit convertisseur (1), selon lequel le circuit convertisseur (1) possède une unité de conversion (2) et un circuit d'accumulation d'énergie (4), l'au moins une source de tension de phase (3) étant raccordée sur le côté tension alternative de l'unité de conversion (2), et l'unité de conversion (2) possédant une pluralité de commutateurs semiconducteurs de puissance commandables,
procédé selon lequel, pendant le fonctionnement du circuit convertisseur (1), un arc électrique qui se produit est détecté et l'au moins une source de tension de phase (3) est alors court-circuitée,
**caractérisé en ce**
**que** pour la détection de l'arc électrique, une grandeur d'état du circuit convertisseur (1) est surveillée du point de vue d'une valeur de seuil pouvant être prédéfinie de la grandeur d'état, et
en ce qu'en cas de différence de la grandeur d'état par rapport à la valeur de seuil pouvant être prédéfinie, au moins une partie des commutateurs semiconducteurs de puissance commandables de l'unité de conversion (2) est commandée de telle sorte qu'au moins un trajet de court-circuit est formé par le biais de l'unité de conversion (2) en vue de court-circuiter l'au moins une source de tension de phase (3).

2. Procédé selon la revendication 1, **caractérisé en ce que** le circuit d'accumulation d'énergie (4) est raccordé sur le côté tension continue de l'unité de conversion (2) et la grandeur d'état est la tension aux bornes du circuit d'accumulation d'énergie (4), la valeur de seuil pouvant être prédéfinie de la grandeur d'état est une valeur de seuil pouvant être prédéfinie de la tension aux bornes du circuit d'accumulation d'énergie (4) et, dans le cas où la tension aux bornes du circuit d'accumulation d'énergie (4) devient inférieure à la valeur de seuil pouvant être prédéfinie, au moins une partie des commutateurs semiconducteurs de puissance commandables de l'unité de conversion (2) est commandée de telle sorte qu'au moins un trajet de court-circuit est formé par le biais de l'unité de conversion (2) en vue de court-circuiter l'au moins une source de tension de phase (3).

3. Procédé selon la revendication 1, **caractérisé en ce que** la grandeur d'état est la tension à une borne de phase (A) sur le côté tension alternative de l'unité de conversion (2), la valeur de seuil pouvant être prédéfinie de la grandeur d'état est une valeur de seuil pouvant être prédéfinie de la tension à une borne de phase (A) sur le côté tension alternative de l'unité de conversion (2) et, dans le cas où la tension à une borne de phase (A) sur le côté tension alternative de l'unité de conversion (2) devient inférieure à la valeur de seuil pouvant être prédéfinie, au moins une partie des commutateurs semiconducteurs de puissance commandables de l'unité de conversion (2) est commandée de telle sorte qu'au moins un trajet de court-circuit est formé par le biais de l'unité de conversion (2) en vue de court-circuiter l'au moins une source de tension de phase (3).

4. Procédé d'élimination d'un arc électrique excité par l'intermédiaire d'au moins une source de tension de phase (3) d'un circuit convertisseur (1), selon lequel le circuit convertisseur possède une unité de conversion (2) et un circuit d'accumulation d'énergie (4), l'au moins une source de tension de phase (3) étant raccordée sur le côté tension alternative de l'unité de conversion (2) et le circuit d'accumulation d'énergie (4) étant raccordé sur le côté tension continue de l'unité de conversion (2), et l'unité de conversion (2) possédant une pluralité de commutateurs semiconducteurs de puissance commandables,
procédé selon lequel, pendant le fonctionnement du circuit convertisseur (1), un arc électrique qui se produit est détecté et l'au moins une source de tension de phase (3) est alors court-circuitée,
**caractérisé en ce**
**que** pour la détection de l'arc électrique, l'environnement du circuit convertisseur est surveillé visuellement afin de détecter la survenance de la lumière d'un arc électrique, et
en ce qu'en cas de survenance de la lumière d'un arc électrique, au moins une partie des commutateurs semiconducteurs de puissance commandables de l'unité de conversion (2) est commandée de telle sorte qu'au moins un trajet de court-circuit est formé par le biais de l'unité de conversion (2) en vue de court-circuiter l'au moins une source de tension de phase (3).
